(19) Europäisches Patentamt
European Patent Office
Office européen des brevets

(11) **EP 4 351 133 A1**

(12) **EUROPEAN PATENT APPLICATION**

(43) Date of publication:
**10.04.2024 Bulletin 2024/15**

(21) Application number: **22306502.0**

(22) Date of filing: **07.10.2022**

(51) International Patent Classification (IPC):
**H04N 19/105** (2014.01)   **H04N 19/117** (2014.01)
**H04N 19/159** (2014.01)   **H04N 19/176** (2014.01)
**H04N 19/82** (2014.01)

(52) Cooperative Patent Classification (CPC):
**H04N 19/105; H04N 19/117; H04N 19/159;
H04N 19/176; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **LE LEANNEC, FABRICE**
  **35830 BETTON (FR)**
• **ANDRIVON, PIERRE**
  **35340 LIFFRE (FR)**
• **RADOSAVLJEVIC, MILOS**
  **35000 RENNES (FR)**

(74) Representative: **RVDB Rennes
44 rue Lariboisière
35235 Thorigné-Fouillard (FR)**

(54) **ENCODING/DECODING VIDEO PICTURE DATA**

(57)   The present application relates encoding/decoding a video picture into/from a bitstream of encoded video picture data comprising encoding/decoding a current block of the video picture at each iteration of a block encoding/decoding loop, wherein the block encoding/decoding loop further comprises padding a current block of the video picture if said current block of the video picture is located along a video picture boundary.

Fig. 12

EP 4 351 133 A1

**Description**

<u>FIELD</u>

The present application generally relates to video picture encoding/decoding. Particularly, but not exclusively, the technical field of the present application is related to motion-compensation based padding of video picture.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left boundaries spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH=**128). A default CTU size (height, width) is encoded into the bitstream, for example at a sequence level in the Sequence Parameter Set (SPS).

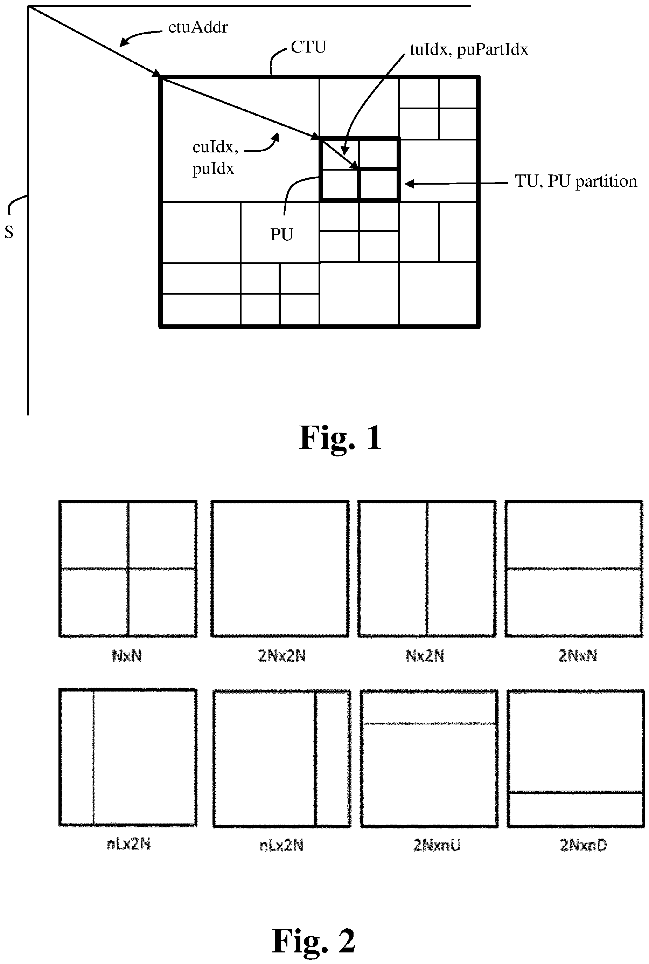

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter prediction CUs, symmetric non-square partitions (2NxN, Nx2N, used only in Inter prediction CUs), and asymmetric Partitions (used only in Inter prediction CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

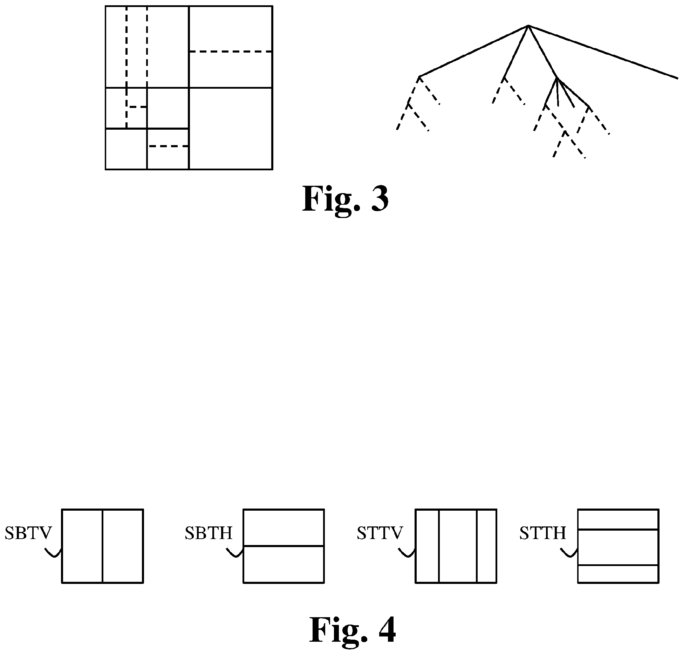

As illustrated on **Figure 3,** in VVC, the coding tree starts from a root node, i.e. the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are

EP 4 351 133 A1

generally not partitioned into PU or TU, except in some specific coding modes.

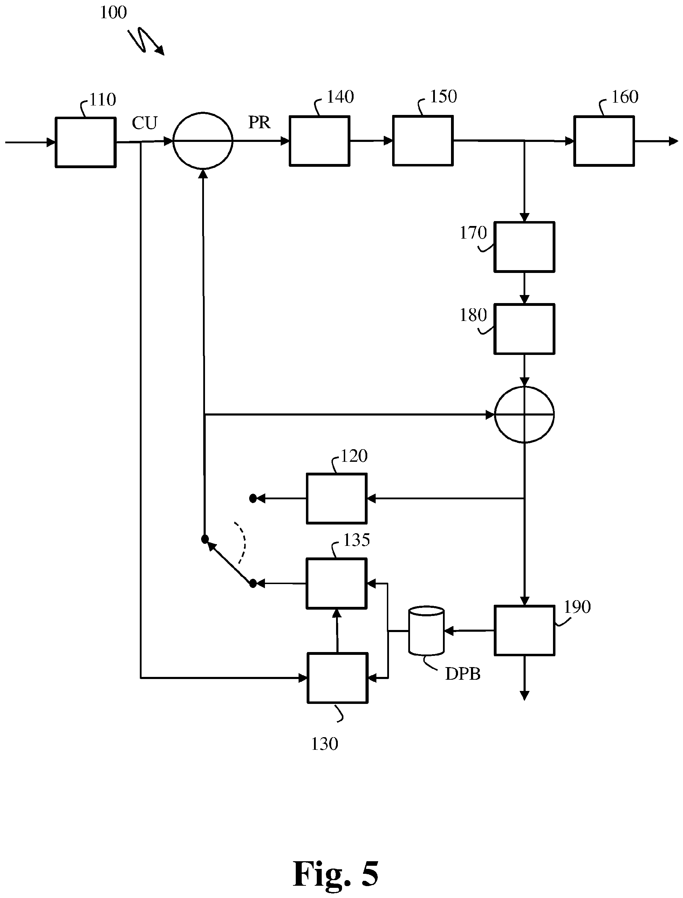

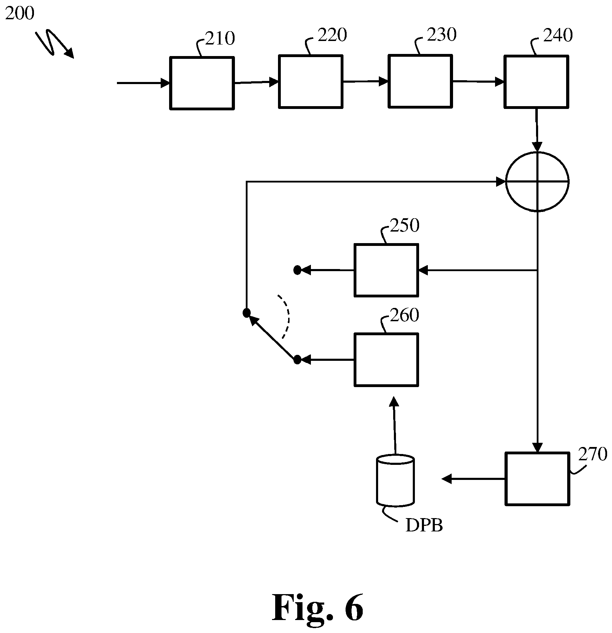

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along a block encoding loop using either an intra or inter prediction mode. The block encoding loop comprises steps 120 to 180.

Intra prediction (step 120) used intra prediction data. Intra prediction consists in predicting a current block by means of an intra-prediction block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference picture(s) used to predictively encode the current video picture, a reference block that is a good predictor of the current block. In uni-directional motion estimation/compensation, a candidate reference block belongs to a single reference picture of a reference picture list denoted L0 or L1, and in bi-directional motion estimation/compensation, the candidate reference block is derived from a reference block of the reference picture list L0 and a reference block of the reference picture list L1.

For instance, a good predictor of the current block is a candidate reference block which is similar to the current block. It may also correspond to a reference block that provides a good trade-off between its similarity to current bock, and the rate cost of motion information needed to indicate its use for the temporal prediction of current block.

The output of the motion estimation step 130 is inter-prediction data comprising motion information associated to the current block and other information used for obtaining a same prediction block at the encoding/decoding side. Typically motion information comprises one motion vector and a reference picture index for uni-directional estimation/compensation and two motion vectors and two reference picture indices for bi-direction estimation/compensation). Next, motion compensation (step 135) obtains a prediction block by means of the motion vector(s) and reference picture index (indices) determined by the motion estimation step 130. Basically, the reference block belonging to a selected reference picture and pointed to by a motion vector may be used as the prediction block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the prediction block.

Prediction information data is signaled into the bitstream. The prediction information may comprise prediction mode (intra or inter or skip), intra/inter prediction data and any other information used for obtaining a same prediction block at the decoding side.

The method 100 selects one prediction mode (the intra or inter prediction mode) by optimizing a rate-distortion trade-off taking into account the encoding of a prediction residual block calculated, for example, by subtracting a candidate prediction block from the current block, and the signaling of prediction information data required for determining said candidate prediction block at the decoding side.

Usually, the best prediction mode is given as being the prediction mode of a best coding mode $p^*$ for a current block given by:

$$p^* = \underset{p \in P}{\mathrm{Argmin}}\{RD_{cost}(p)\} \quad (1)$$

where $P$ is the set of all candidate coding modes for the current block, $p$ represents a candidate coding mode in that set, $RD_{cost}(p)$ is a rate-distortion cost of candidate coding mode p, typically expressed as:

$$RD_{cost(p)} = D(p) + \lambda . R(p)$$

$D(p)$ is the distortion between the current block and a reconstructed block obtained after encoding/decoding the current block with the candidate coding mode $p$, $R(p)$ is a rate cost associated with the coding of the current block

3

with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best prediction block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the prediction block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed video picture is divided into current blocks based on the partitioning information.

Each current block is reconstructed along a block decoding loop using either an intra or inter prediction mode. The block decoding loop comprises steps 220 to 270.

Each current block is entropy decoded from the bitstream. Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A prediction block is obtained through its intra prediction (step 250) or its motion-compensated temporal prediction (step 260). The prediction process performed at the decoding side is identical to that of the encoding side.

Next, the decoded prediction residual block and the prediction block are then combined, typically summed, which provides a reconstructed block.

In step 270, in-loop filters may apply to a reconstructed video picture (comprising reconstructed blocks or the filtered reconstructed blocks) and the reconstructed blocks or the filtered reconstructed blocks form a reference picture that may be stored into a decoded picture buffer (DPB) as above discussed (**Figure 5**).

In VVC, motion information is stored per 4x4 blocks in each video picture. This means once a reference picture is stored in the decoded picture buffer (DPB, **Figure 5** or **6**), motion vectors and reference pictures indices used for the temporal prediction of video picture blocks are stored on a 4x4 block basis. They can serve as temporal prediction of motion information for encoding/decoding a subsequent inter-prediction video picture.

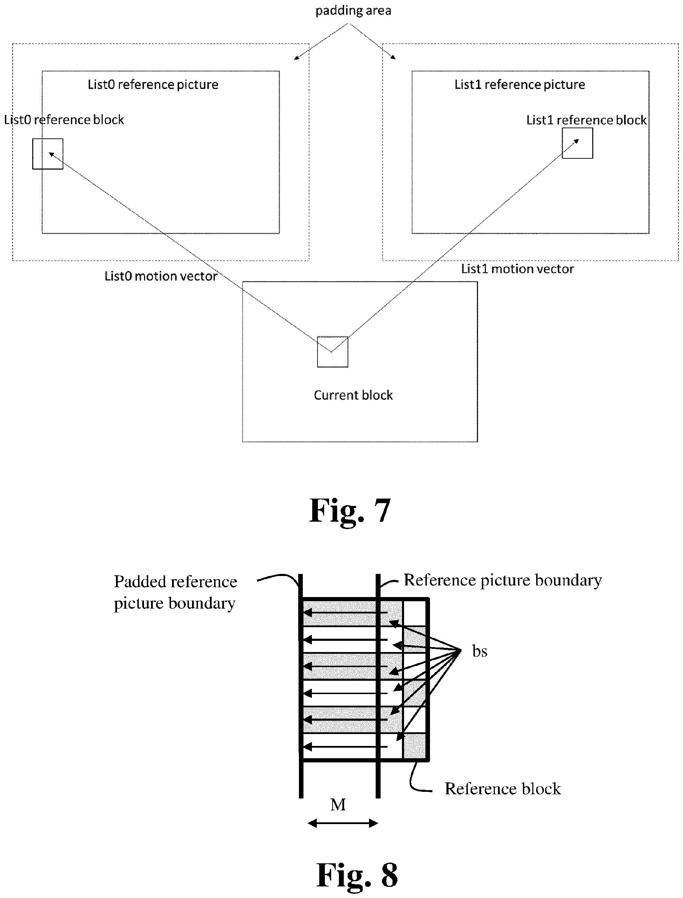

In VVC, a temporal prediction of a current block may be based on a reference block of a reference picture that may overlap a boundary of said reference picture. For example, **Figure 7** shows an example of a bi-directional motion-compensated prediction of a current block based on a first reference block of a reference picture list L0 and a second reference block of a reference picture list L1. The first (respectively second) reference block is pointed to by a first (respectively second), motion vector. In the example of **Figure 7,** a first reference block is partly outside the reference picture of the reference picture list L0, and a second reference block is inside the reference picture of the reference picture list L1. More generally, a reference block of one of the two reference pictures or the two reference blocks of these two reference pictures can partly or entirely lie outside reference picture boundaries.

In VVC, to handle such situations, reference pictures are extended through a simple padding method that consists in a perpendicular padding of the video picture boundary samples **bs** as illustrated on **Figure 8.** This consists in simply repeating boundary sample value **bs** along a row or column of samples perpendicular to the reference picture boundary, beyond this boundary. The reference picture is extended along each of its boundary by extensions of P samples.

Motion-compensation based padding methods improve the basic padding of **Figure 8.**

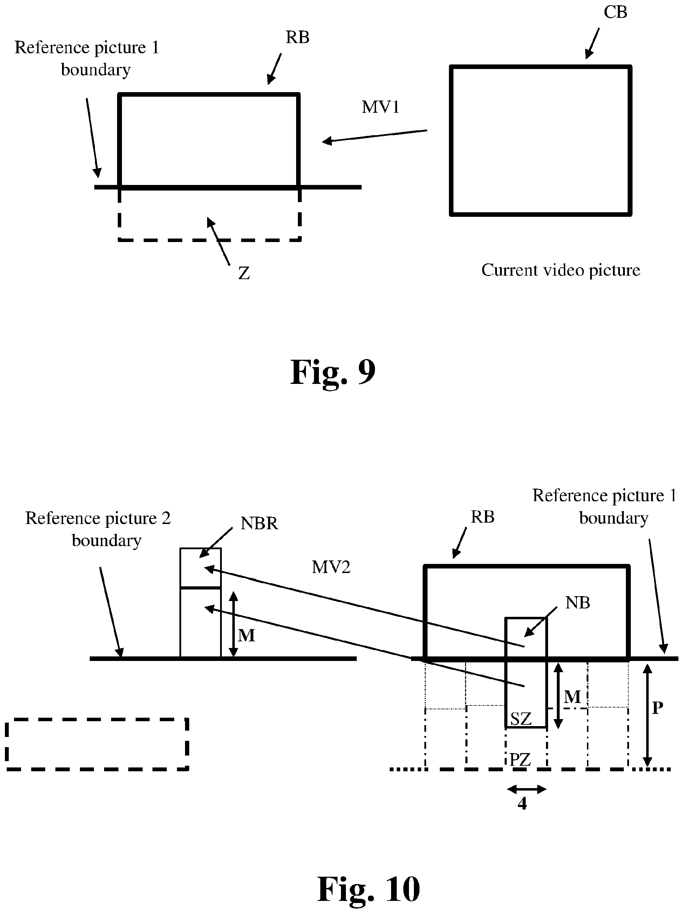

A first motion-compensation based padding method is described in section 3.1 of the JVET contribution JVET-J0021 ("Description of SDR, HDR and 360° video coding technology proposal by Qualcomm and Technicolor - low and high complexity versions", Joint Video Exploration Team (JVET) of ITU-T SG 16 WP 3 and ISO/IEC JTC 1/SC 29/WG 11, 10th Meeting: San Diego, US, 10-20 Apr. 2018, Document "https://jvet-experts.org/doc_end_user/documents/10_San%20Diego/wg11/JVET-J0021-v5.zip"). Basically, as illustrated on **Figure 9,** when the decoder performs motion compensation, if a motion vector MV1 associated with a block CB of a current video picture points to a block RB at least partly outside boundaries of a reference picture 1, a region Z of the reference block RB is not available and the reference picture 1 shall be extended (padded) over the region Z. For that, the block RB may be subdivided into multiple subblocks all located along the video picture boundary. Subblocks are associated with motion vectors when the block CB is inter-predicted. The numbers of subblocks may depend on the way the motion vector associated with the block CB is stored. For example, if the motion vector associated with the block CB is stored on a 4x4 basis, then the block CB is split into 4x4 subblocks.

As illustrated on **Figure 10,** the block CB is split into five 4x4 subblocks and a padded boundary zone PDZ is computed for each subblock. The padded boundary zone PDZ associated with a subblock NB is split into one sub-region SZ with size 4xM or Mx4 and a second sub-region PZ of size 4x(P - M), where P is the size of the padded boundary zone. For each sub-region SZ along a reference picture boundary, a motion vector MV2 is derived from the nearest 4x4 subblock NB inside the reference picture 1 and a 4x4 subblock of a reference picture 2. If the nearest 4x4 subblock NB is intra-coded (intra-predicted), a zero-motion vector MV2 is used. If the nearest 4x4 subblock NB is coded (predicted) with bi-directional inter-prediction, only the motion vector, which points to the samples farther away from the boundary of its reference picture, is used in motion compensation for padding. After the motion vector derivation, motion compensation is then performed using the selected motion vector MV2 and the reference picture 2 to obtain the samples in the sub-region SZ with the consideration of average sample value offset between the nearest 4x4 subblock and its corresponding block in the reference picture 2. Note the size M of the inter-prediction-based extended region results from the value of the motion vector MV2 and is related to the distance between the video picture boundary and the position pointed to by the motion vector MV2, see **Figure 10.** Furthermore, the size M may be smaller than the size P. In such case, the inter-prediction-based padding is further completed by the basic perpendicular padding of VVC.

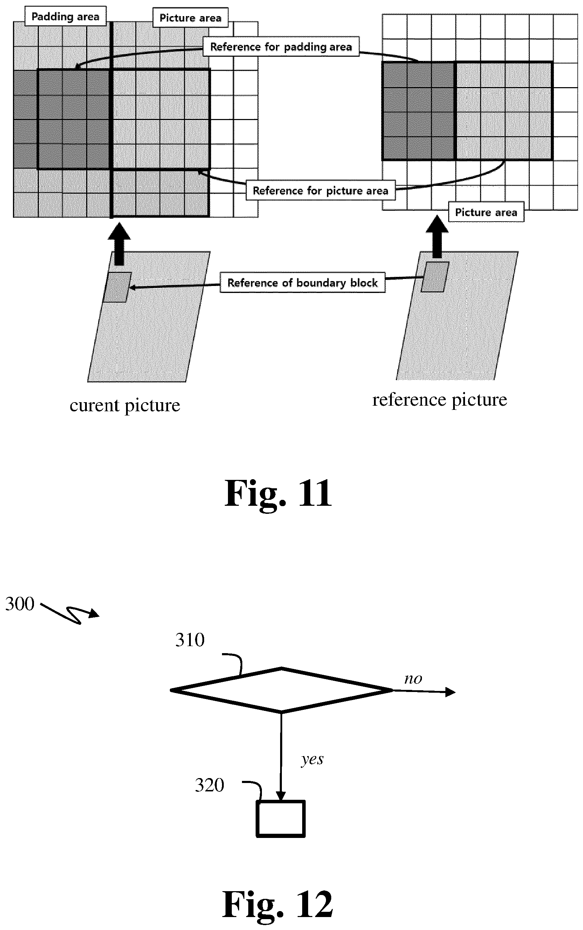

A second motion-compensation based padding method is described in section 2.1.7.5 of the JVET contribution JVET-J0025 ("Description of SDR, HDR and 360° video coding technology proposal by Huawei, GoPro, HiSilicon, and Samsung - general application scenario", Joint Video Exploration Team (JVET) of ITU-T SG 16 WP 3 and ISO/IEC JTC 1/SC 29/WG 11, 10th Meeting: San Diego, US, 10-20 Apr. 2018, Document https://jvet-experts.org/doc_end_user/documents/10_San%20Diego/wg11/JVET-J0025-v4.zip). Basically, if a boundary sample of a video picture is derived by a motion compensation, padded sample is also derived by using said motion compensation as illustrated on **Figure 11.** For using neighbor sample of reference block, motion compensation of the area which is referenced by padded sample is conducted. If the area is smaller than padded area or boundary block is not derived by motion compensation, left padded sample is derived using last samples. Top-left, top-right, bottom-left, bottom-right of padding area are derived by using last sample of each position. This method is conducted after in-loop filtering.

A third motion-compensation based method handling out of boundaries reference blocks is described in section 2.1.7.5 of the JVET contribution JVET-Y0125 ("AHG12: Enhanced bi-directional motion compensation", Yi-Wen Chen, Che-Wei Kuo, Ning Yan, Wei Chen, Xiaoyu Xiu, Xianglin Wang, Joint Video Experts Team (JVET) of ITU-T SG 16 WP 3 and ISO/IEC JTC 1/SC 29 25th Meeting, by teleconference, 12-21 January 2022, Document JVET-Y0125). Basically, to avoid prediction (motion-compensated prediction) blocks **b** be at least partly out of the reference picture boundaries which are less effective, when combining more than one motion-compensated prediction blocks, the OOB (out-of-boundaries) prediction samples of a prediction block **b** are discarded and only the non-OOB (in-boundaries) prediction samples are used to generate the final prediction block. More precisely, let $(Pos\_x_{i,j}, Pos\_y_{i,j})$ be the cartesian coordinates of a sample position (i,j) within current block. Let ( $Mv\_x_{i,j}^{Lx}, Mv\_y_{i,j}^{Lx}$ ) be the cartesian coordinates of motion vector (MV) associated with the sample position (i,j) within current block (*Lx* indicates if the reference picture belongs to the reference picture list L0 (x=0) or to the reference picture list L1 (x=1). Let $Pos_{LeftBdry}$, $Pos_{RightBdry}$, $Pos_{TopBdry}$, $Pos_{BottomBdry}$ be cartesian coordinates of the 4 reference picture boundaries.

A prediction sample $P_{i,j}^{Lx}$ for sample position (i,j) of a prediction block $P^{Lx}$ is regarded as OOB when at least one of the following conditions holds

$$(Pos\_x_{i,j} + Mv\_x_{i,j}^{Lx}) > (Pos_{RightBdry} + \text{half\_sample}),$$

$$(Pos\_x_{i,j} + Mv\_x_{i,j}^{Lx}) < (Pos_{LeftBdry} - \text{half\_sample}),$$

$$(Pos\_y_{i,j} + Mv\_y_{i,j}^{Lx}) > (Pos_{BottomBdry} + \text{half\_sample}),$$

or

$$(Pos\_y_{i,j} + Mv\_y_{i,j}^{Lx}) < (Pos_{TopBdry} - \text{half\_sample})$$

When none of the above conditions holds, the prediction sample $P_{i,j}^{Lx}$ is regarded as non-OOB. Here, half_sample represents half the distance between two neighboring luma sample, according to the codec's MV internal representation accuracy (1/16-pel for VVC). Otherwise, the prediction sample $P_{i,j}^{Lx}$ is regarded as OOB. A prediction block $P^{Lx}$ is then regarded as OOB if at least one of its samples is OOB and is regarded as non-OOB when all its samples are non-OOB. Here, *half_sample* represents half the distance between 2 samples, according to the codec's MV internal representation accuracy (1/16-pel for VVC).

Next, if the prediction sample $P_{i,j}^{L0}$ is OOB and the prediction sample $P_{i,j}^{L1}$ is non-OOB, then the final prediction sample $P_{i,j}^{final}$ equals the prediction sample

Else, if the prediction sample $P_{i,j}^{L0}$ is non-OOB and the prediction sample $P_{i,j}^{L1}$ is OOB, then the final prediction sample $P_{i,j}^{final}$ equals the prediction sample

Else, the final prediction sample $P_{i,j}^{final}$ is given by a weighted average of the two prediction sample $P_{i,j}^{L0}$ and $P_{i,j}^{L1}$. This weighted average is typically the mean value, thus using weight ½ and ½).

In prior art, motion-compensated based padding methods are implemented systematically to extend a video picture after it has been fully reconstructed, and to store the so motion-compensated padded video picture in the decoded picture buffer (DPB), so as to use it as a reference picture for future video picture to predictively encode or decode.

Such motion-compensated based padding methods are very simple to implement both at the encoder and decoder.

However, the issue with such implementation of motion-compensation based padding methods is that it increases the complexity of the encoding/decoding processes.

Indeed, a video picture is padded once said video picture is fully reconstructed and has undergone loop filtering operations. The motion-compensated based extension of the so-reconstructed video picture adds a decoding step for the full video picture (for all the blocks of the reconstructed video picture). This introduces an additional delay between the time a current video picture is reconstructed and the time it is available for the prediction of subsequent video pictures to encode/decode.

One of the problems solved by the present invention is to design a motion-compensated based padding method that does not increase the number of picture level processing stages in the normative design of a video decoder to avoid introducing said additional delay.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of encoding a video picture from a bitstream of encoded video picture data, the method comprising encoding a current block of the video picture at each iteration of a block encoding loop, wherein the block encoding loop further comprises padding a current block of the video picture if said current block of the video picture is located along a video picture boundary.

According to a second aspect of the present application, there is provided a method of decoding a video picture from a bitstream of encoded video picture data, the method comprising decoding a current block of the video picture at each iteration of a block decoding loop, wherein the block decoding loop further comprises padding a current block of the video picture if said current block of the video picture is located along a video picture boundary.

In one exemplary embodiment, if the current block of the video picture is predicted from data of the video picture, then padding the current block of the video picture comprises padding the current block of the video picture by generating a padded boundary zone computed by repeating boundary sample values of the current block of the video picture along a row or column of samples perpendicular to the video picture boundary, beyond said video picture boundary.

In one exemplary embodiment, if the current block of the video picture is associated with a motion vector pointing to an internal part of a reference picture, padding the current block of the video picture further comprises:

- obtaining multiple subblocks by subdividing the current block, each subblock being associated with a motion vector;

- checking whether each current subblock is adapted for motion-compensation based padding of said current subblock;

- if the motion vector associated with a current subblock is not adapted for motion-compensation based padding of said current subblock, the current subblock is padded by generating a padded boundary zone computed by repeating boundary sample values of the current subblock along a row or column of samples perpendicular to the video picture boundary, beyond said video picture boundary;

- if the motion vector associated with the current subblock is adapted for motion-compensation based padding of said current subblock, the current subblock is padded by computing a padded boundary zone by motion-compensation based on a motion vector associated with the current subblock.

In one exemplary embodiment, if the size of the padded boundary zone is lower than a given size, then padding the current block of the video picture further comprises completing the padded boundary zone by repeating boundary sample values of the current subblock along a row or column of samples perpendicular to the video picture boundary, beyond said video picture boundary.

In one exemplary embodiment, padding the current block of the video picture comprises checking whether the current block is adapted for motion-compensation based padding of said current block.

In one exemplary embodiment, if the motion vector associated with the current block is not adapted for motion-compensation based padding of said current block, then padding the current block of the video picture further comprises generating a padded boundary zone computed by repeating boundary sample values of the current block along a row or column of samples perpendicular to the video picture boundary, beyond said video picture boundary.

In one exemplary embodiment, if the motion vector associated with the current block is adapted for motion-compensation based padding of said current block, then padding the current block of the video picture further comprises:

- determining a size of a padded boundary zone based on the motion vector associated with the current block;

- computing the padded boundary zone by motion-compensation based on the motion vector associated with the current block;

- computing a motion-compensated temporal prediction block to predict a block formed by the current block and the padded boundary zone;

- padding the padded boundary zone with samples of the motion-compensated temporal prediction block.

In one exemplary embodiment, if the size of the padded boundary zone is lower than a given size, then padding the current block of the video picture further comprises completing the padded boundary zone by repeating boundary sample values of the current subblock along a row or column of samples perpendicular to the video picture boundary, beyond said video picture boundary.

In one exemplary embodiment, a motion vector associated with the current subblock being associated with a reference picture and the motion vector is adapted for motion-compensation based padding of said current subblock when said motion vector points to a position internal to the boundaries of said reference picture.

In one exemplary embodiment, the part of the padded boundary zone computed by motion-compensation is refined after the current block of the video picture is reconstructed.

According to a third aspect of the present application, there is provided a bitstream of encoded video picture data generated by one of the method according to the first aspect of the present application.

According to a fourth aspect of the present application, there is provided an apparatus comprising means for performing one of the method according to the first and/or second aspect of the present application.

According to a fifth aspect of the present application, there is provided a computer program product including instructions which, when the program is executed by one or more processors, causes the one or more processors to carry out a method according to the first and/or second aspect of the present application.

According to a sixth aspect of the present application, there is provided a non-transitory storage medium carrying instructions of program code for executing a method according to the first and/or second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** shows an example of a bi-directional motion-compensated prediction in accordance with prior art;

**Figure 8** shows a padding method in accordance with prior art;

**Figures 9** and **10** show an example of a first inter-prediction-based padding method in accordance with prior art;

**Figure 11** shows an example of a second inter-prediction-based padding method in accordance with prior art;

**Figure 12** shows schematically a block diagram of steps of a padding method 300 in accordance with an exemplary embodiment;

**Figure 13** shows schematically a block diagram of step 320 when a reconstructed current block is located along a video picture border in accordance with an exemplary embodiment;

**Figure 14** shows an example of step 320 of **Figure 13;**

**Figure 15** shows schematically a block diagram of a prediction method 400 of a current block of a video picture in accordance with an exemplary embodiment;

**Figure 16** shows schematically a block diagram of method 500 of prediction a current block of a video picture in accordance with an exemplary embodiment; and

**Figure 17** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relate to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprises in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

Generally speaking, the present application relates encoding/decoding a video picture into/from a bitstream of encoded video picture data comprising encoding/decoding a current block of the video picture at each iteration of a block encoding/decoding loop, wherein the block encoding/decoding loop further comprises padding a current block of the video picture if said current block of the video picture is located along a video picture boundary.

The present invention implements a padding method at block level during the block encoding/decoding loop rather than at a picture level as in prior art, i.e. once a video picture is fully reconstructed. The padding is thus performed at the same time of reconstruction of blocks located along a video picture boundary. Hence, the blocks of the video picture being reconstructed are padded before the in-loop filtering of the encoding method (step 190 of **Figure 5**) and decoding method 200 (step 270 of **Figure 6**).

**Figure 12** shows schematically a block diagram of steps of a padding method 300 of a current block in accordance with an exemplary embodiment.

In step 310, method 300 checks whether a current block of the video picture being encoded/decoded is located along a video picture boundary, i.e. one border of said current block is along said video picture boundary.

This includes current block located at a corner of the video picture, i.e. two borders of said current block are along a video picture boundary.

If the current block of the video picture is not located along a video picture boundary then method 300 ends (no padding of the current block).

If the current block of the video picture is along a video picture border, in step 320, the current block is padded by generating a padded boundary zone PDZ to extend the current block beyond the video picture boundary.

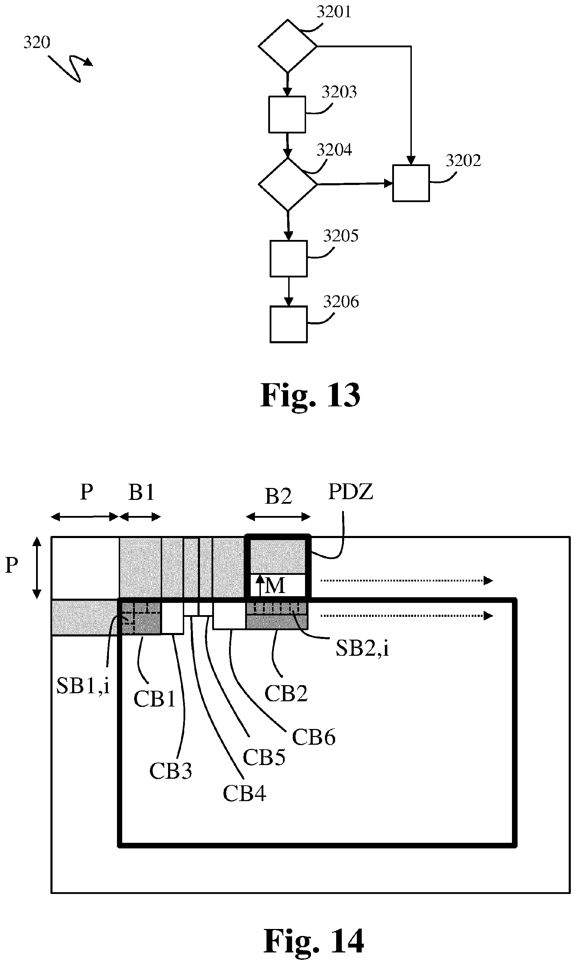

**Figure 13** shows schematically a block diagram of step 320 when a reconstructed current block is located along a video picture border in accordance with an exemplary embodiment.

According to this exemplary embodiment, the padding method 300 is performed after reconstructing a block located at a video picture boundary. A reconstructed current block is obtained by combining, typically summing, a decoded prediction residual block and a prediction block (steps 120, 130, 135 of **Figure 5,** steps 250, 260 of **Figure 6**).

In step 3201, one checks whether the reconstructed current block is inter-predicted.

If the reconstructed current block is not inter-predicted, then the reconstructed current block is intra-predicted, i.e. is predicted from data of the video picture. Then, in step 3202, the reconstructed current block may be padded according to a perpendicular padding, i.e. by generating a padded boundary zone PBZ computed by repeating boundary sample values of the reconstructed current block along rows or columns of samples perpendicular to the video picture boundary, beyond said video picture boundary.

An example of perpendicular padding method is shown in **Figure 8.**

The size of the padded boundary zone PBZ may be BxM where B is the number of samples of a row or column of the reconstructed current block and M is the number of repeated samples. **Figure 14** shows examples of padded boundary zone PBZ with different sizes. In the case the reconstructed block is intra-predicted, M may be equal to P, i.e. the size of the full picture extension area (see **Figure 14**).

Each reconstructed current block may be subdivided into multiple subblocks all located along the video picture boundary. Subblocks are associated with motion vectors MVs when the reconstructed current block is inter-predicted. The sizes of the subblocks are usually selected according to the storage of the motion vector MV associated with the reconstructed current block. For example, when the motion vector associated with the reconstructed current block is stored in a 4x4 basis, then 4x4 subblocks are considered, each associated with a stored motion vector associated with the reconstructed current block. In this example, the 4 rows or columns of the reconstructed current blocks closest to the video picture boundary are considered and such 4 rows and columns are split to get the 4x4 subblocks.

If the reconstructed current block is inter-predicted, in step 3203, a current subblock of the reconstructed current block among the subblocks of this reconstructed current block located along the video picture boundary is considered.

In step 3204, one checks whether the motion vector associated with the current subblock is adapted for motion-compensation based padding of said current subblock.

In one exemplary embodiment of step 3204, the motion vector associated with the current subblock being associated with a reference picture and the motion vector is adapted for motion-compensation based padding of said current subblock when said motion vector points to a position internal to the boundaries of said reference picture.

If the motion vector associated with the current subblock is not adapted for motion-compensation based padding of said current subblock, the current subblock is padded by computing a padded boundary zone PDZ according to a perpendicular padding, i.e. by generating a padded boundary zone (PBZ) computed by repeating boundary sample values of the current subblock along a row or column of samples perpendicular to the video picture boundary, beyond said video picture boundary (step 3202).

If the motion vector associated with the current subblock is adapted for motion-compensation based padding of said current subblock, in step 3205, the current subblock is padded by computing a padded boundary zone PBZ by motion-compensation based on the motion vector associated with the current subblock.

In one exemplary embodiment of step 3205, the padded boundary zone PBZ is computed according to a method similar to the method described in relation with **Figure 10.** In the case of motion compensated boundary padding, the padding zone PBZ corresponds to the zone SZ of **Figure 10.** Basically, a motion vector MV is derived from the current subblock and a subblock of a reference picture. If the current subblock is coded (predicted) with bi-directional inter-prediction, only the motion vector, which points to the samples farther away from the boundary of its reference picture, is used in motion compensation for padding. After the motion vector derivation, motion compensation is then performed using the selected motion vector MV and the reference picture to obtain the samples in the padded boundary zone PBZ. Optionally, an average sample value offset between the current subblock and its corresponding subblock in the reference picture may further be applied to the motion compensated zone PBZ, to improve the quality of padded zone PBZ.

Note the size M of the padded boundary zone PBZ results from the value of a motion vector and is related to a distance between the video picture boundary and the position pointed to by the motion vector, see **Figure 10.**

In one variant, if the size M of the padded boundary zone PBZ computed by motion-compensation is lower than a given size P of the padded area of the video picture, then in step 3206, the padded boundary zone PDZ is completed by perpendicular padding of size (P-M) as defined, for example in VVC.

Steps 3205 or 3206 are followed by step 3203 to consider another subblock of the reconstructed current block.

The methods ends when all subblocks of the reconstructed current blocks have been considered.

Step 320 of **Figure 13** implements a motion-compensated based padding that takes place at the same time of the block-by-block picture encoding/decoding method 100/200. Thus, a padded area of a current video picture being encoded/decoded is computed as long as blocks located along a video picture boundary are being reconstructed. No latency increase is due to the computation of the padded reference picture, as is the case in prior art methods.

**Figure 14** shows an example of step 320 of **Figure 13.**

In this example, two blocks CB1 and CB2 are inter-predicted. The block CB1, respectively CB2, have a size B1, respectively B2. Three subblocks SB1,i are obtained from the first block CB1 along a horizontal video picture boundary and three others subblocks SB1,i are obtained from the first block CB1 along a vertical video picture boundary because the block CB1 is located at a corner of the video picture. Sept subblocks SB2,i are obtained for the block CB2 along a horizontal video picture boundary. The number of subblocks depends on the size of the block and how the motion vector associated with the block is stored. Each subblock shall be associated with a motion vector.

The blocks CB3 to CB6 are intra-predicted and the padded boundary zone PDZ is computed according to a perpendicular padding.

Each subblock SB1,i, respectively, SB2,i of the block CB1, respectively CB2, is adapted for motion-compensation based padding of said subblock. Each of said subblock is then padded by computing a padded boundary zone PDZ by motion-compensation based on the motion vector associated with the current subblock.

In this example, the size M equals the given size P for the subblocks of the block CB1. For the block CB2, M<P and a perpendicular padding is used for padding the remaining part of the final padded boundary zone PBZ of size P.

In one exemplary embodiment, the padding method 300 is performed at the same time as block prediction of the decoding method 200, i.e. after a current block is decoded (entropy decoded) but before the current block is fully reconstructed.

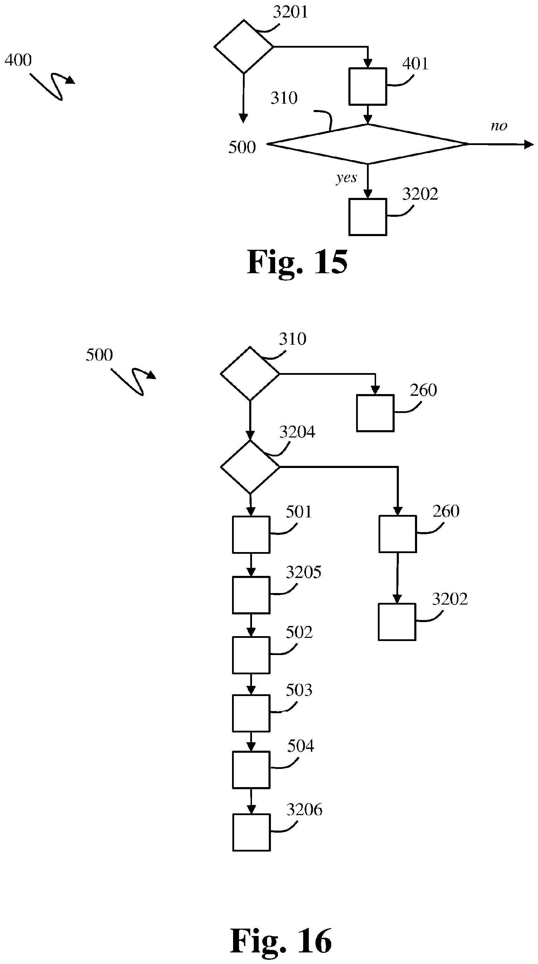

**Figure 15** shows schematically a block diagram of a prediction method 400 of a current block of a video picture in accordance with an exemplary embodiment.

In step 3201, one checks whether the current block is inter-predicted.

If the current block is not inter-predicted, then the current block is intra-predicted, i.e. is predicted from data of the video picture. Step 3201 is then followed by steps 401, 310 and 3202.

In step 401, a prediction block is obtained through intra prediction (step 250 of **Figure 6**), a decoded prediction residual block is also obtained and combined with the prediction block, typically summed, to provide a reconstructed current block.

In step 310, method 400 checks whether the reconstructed current block is located along a video picture boundary.

If the reconstructed current block is located at a video picture boundary, then in step 3202, the reconstructed current subblock is padded by computing a padded boundary zone PDZ according to a perpendicular padding.

If the reconstructed current block is not located at a video picture boundary, method 400 ends.

If the current block is inter-predicted, then the current block is predicted according to method 500 of **Figure 16** which provides a prediction block. A decoded prediction residual block is then obtained and combined with the prediction block, typically summed, to provide a reconstructed current block.

**Figure 16** shows schematically a block diagram of method 500 of prediction a current block of a video picture in accordance with an exemplary embodiment.

The current block in **Figure 16** may indicate either a subblock contained in a considered block (CU) (for the case of subblock-based motion compensation, typically for CU coded in affine mode) or the whole considered block (CU) (in the case of a CU predicted with a single motion vector for each reference picture).

The current block to be inter-predicted is of size WxH and is associated with a motion vector MV for example obtained from a bitstream.

In step 310, method 300 checks whether the current block of the video picture being decoded is located along a video picture boundary.

If the current block of the video picture is not located along a video picture boundary then in step 260, method 500 provides a prediction block by motion-compensated temporal predicting the current block as in VVC.

If the current block of the video picture is located along a video picture boundary, steps 501-504, 3204, 3205 and 260 are performed.

In step 3204, method 500 checks whether the motion vector associated with the current block is adapted for motion-compensation based padding of said current block.

If the motion vector associated with the current block is not adapted for motion-compensation based padding of said current block, then in step 260, method 500 provides a prediction block by motion-compensated temporal predicting the current block as in VVC, and in step 3202, the current block is padded by computing a padded boundary zone PDZ according to a perpendicular padding.

If the motion vector associated with the current block is adapted for motion-compensation based padding of said current block, steps 501-504 and 3205 perform.

In step 501, a size M of a padded boundary zone PBZ is determined based on the motion vector associated with the current block and in step 3205, the current block is padded by computing a padded boundary zone PBZ of size M by motion-compensation based on the motion vector associated with the current block.

For example, the size M results from the value of the motion vector and is related to the distance between the video picture boundary and the position pointed to by the motion vector.

In step 502, a first motion-compensated temporal prediction block is computed to predict the current block of size WxH (the initial size of the current block). This first motion-compensated temporal prediction block is used for motion-compensated temporal prediction (step 260).

In step 503, a second motion-compensated temporal prediction block is computed to predict an "extended" block formed by the current block and the padded boundary zone PBZ. The "extended" block has a size WxM or MxW (depending on the horizontality or verticality of the video picture boundary).

The first and second motion-compensated temporal prediction block may be computed by usual uni- or bi-directional motion-compensation methods as in VVC.

In step 504, the second motion-compensated temporal prediction block is used to pad the padded boundary zone PBZ (zone SZ), i.e. the padded boundary zone (PBZ) is padded with samples of the second motion-compensated temporal prediction block.

In one variant, if the size M of the padded boundary zone PBZ computed by motion-compensation is lower than a given size P of the padded area of the video picture, then in step 3206, the padded boundary zone PDZ is completed by perpendicular padding of size (P-M) as defined, for example in VVC.

Note in the case of a bi-directional prediction of the current block, the padding (step 505 followed by step 3205) are performed for only one inter-prediction, i.e. with respect to only one reference picture list (L0 or L1). The decoder may keep in memory the fact that said padding has taken place for a first inter direction (L0 or L1), and no padding may be applied for the current block, when predicting it from the other inter direction.

In one exemplary embodiment, the part of the padded boundary zone PBZ computed by motion-compensation, i.e. the sub-region SZ in **Figure 10,** may be refined after the current block of the video picture is reconstructed.

In one exemplary embodiment, the part of the padded boundary zone PBZ computed by motion-compensation may be refined by adding a correction offset to the sample values of the padded boundary zone PBZ.

In one exemplary embodiment, the correction offset may be obtained based on a subblock of the reconstructed block and a subblock pointed to by the motion vector associated with said subblock.

For example, the correction offset may be calculated for each 4x4 subblock NB of the reconstructed current block as the average difference between the 4x4 subblock NB and a 4x4 subblock NBR pointed by the motion vector associated with current subblock.

In one exemplary embodiment, the correction offset may be obtained based on a subblock of the reconstructed block and may be applied to the padded boundary zone PBZ associated with said reconstructed block. To do so, the correction offset computed as the average difference between 4x4 subblock NB and 4x4 subblock NBR of **Figure 10,** is added to the 4xM sub-part of the motion compensated padded zone PBZ, which is located next to 4x4 sub-block NB.

In one exemplary embodiment, said reconstructed subblock may be computed based on the whole reconstructed block, or a sub-part of it close to the video picture boundary, or may be computed on a 4x4 subblock basis, for each 4x4 subblock along the video picture boundary in the considered block

In exemplary embodiment of step 320, the part of the padded boundary zone PBZ computed by perpendicular padding may be refined after the current block of the video picture is reconstructed.

According to a variant, the full padded zone PDZ may be refined based on the computed additive correction offset, i.e. also the part of PDZ obtained through perpendicular padding.

Note the refinement does not apply when the subblock is intra-predicted (step 3201 of **Figure 15**) since the reconstructed subblock is padded (3202) by computing a padded boundary zone PDZ according to a perpendicular padding if the reconstructed block is located at a video picture boundary (step 310).

In one exemplary embodiment, the block decoding loop **(Figure 6)** further comprising in-loop filtering (step 270 of **Figure 6**) the reconstructed blocks of the video picture, said in-loop filtering being followed by refining, at least partially, the padded boundary zone PBZ associated with subblock of said reconstructed blocks.

For instance, this may apply after the deblocking filter, after the sample adaptive offset, after bilateral filtering or after adaptive loop filtering.

In that case, the refinement of the padded boundary zones MBZ may apply both to inter- or intra- predicted blocks.

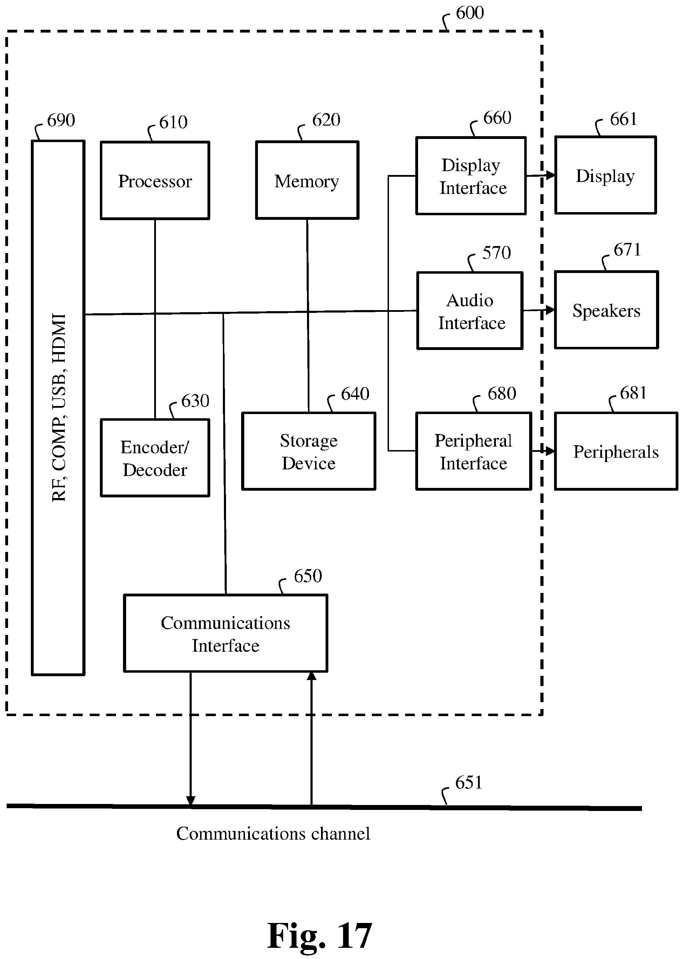

**Figure 17** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-17,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1.  A method of encoding a video picture from a bitstream of encoded video picture data, the method comprising encoding a current block of the video picture at each iteration of a block encoding loop, wherein the block encoding loop further comprises padding (320) a current block of the video picture if said current block of the video picture is located along a video picture boundary (310).

2.  A method of decoding a video picture from a bitstream of encoded video picture data, the method comprising decoding a current block of the video picture at each iteration of a block decoding loop, wherein the block decoding loop further comprises padding (320) a current block of the video picture if said current block of the video picture is located along a video picture boundary (310).

3.  The method of claim 1 or 2, wherein if the current block of the video picture is predicted from data of the video picture, then padding (320) the current block of the video picture comprises padding (3202) the current block of the video picture by generating a padded boundary zone (PBZ) computed by repeating boundary sample values of the current block of the video picture along a row or column of samples perpendicular to the video picture boundary, beyond said video picture boundary.

4.  The method of claim 3, wherein if the current block of the video picture is associated with a motion vector pointing to an internal part of a reference picture, padding (320) the current block of the video picture further comprises:

    - obtaining multiple subblocks by subdividing the current block, each subblock being associated with a motion vector;
    - checking (3204) whether each current subblock is adapted for motion-compensation based padding of said current subblock;
    - if the motion vector associated with a current subblock is not adapted for motion-compensation based padding of said current subblock, the current subblock is padded (3202) by generating a padded boundary zone (PBZ) computed by repeating boundary sample values of the current subblock along a row or column of samples perpendicular to the video picture boundary, beyond said video picture boundary;
    - if the motion vector associated with the current subblock is adapted for motion-compensation based padding of said current subblock, the current subblock is padded by computing a padded boundary zone (PBZ) by motion-compensation based on a motion vector associated with the current subblock.

5.  The method of claim 4, wherein if the size of the padded boundary zone (PBZ) is lower than a given size, then padding (320) the current block of the video picture further comprises completing (3206) the padded boundary zone (PBZ) by repeating boundary sample values of the current subblock along a row or column of samples perpendicular to the video picture boundary, beyond said video picture boundary.

6.  The method of claim 1 or 2, wherein padding (320) the current block of the video picture comprises checking (3204) whether the current block is adapted for motion-compensation based padding of said current block.

7.  The method of claim 6, wherein if the motion vector associated with the current block is not adapted for motion-compensation based padding of said current block, then padding (320) the current block of the video picture further comprises generating (3202) a padded boundary zone (PBZ) computed by repeating boundary sample values of the current block along a row or column of samples perpendicular to the video picture boundary, beyond said video picture boundary.

8.  The method of claim 6 or 7, wherein if the motion vector associated with the current block is adapted for motion-compensation based padding of said current block, then padding (320) the current block of the video picture further comprises:

    - determining (502) a size (M) of a padded boundary zone (PDZ) based on the motion vector associated with the current block;
    - computing (3205) the padded boundary zone (PDZ) by motion-compensation based on the motion vector associated with the current block;
    - computing (503) a motion-compensated temporal prediction block to predict a block formed by the current block and the padded boundary zone (PDZ);
    - padding (504) the padded boundary zone (PDZ) with samples of the motion-compensated temporal prediction block.

9. The method of claim 8, wherein if the size (M) of the padded boundary zone (PDZ) is lower than a given size (P), then padding (320) the current block of the video picture further comprises completing (3206) the padded boundary zone (PDZ) by repeating boundary sample values of the current subblock along a row or column of samples perpendicular to the video picture boundary, beyond said video picture boundary.

10. The method of one of claims 1 or 9, wherein a motion vector associated with the current subblock being associated with a reference picture and the motion vector is adapted for motion-compensation based padding of said current subblock when said motion vector points to a position internal to the boundaries of said reference picture.

11. The method of one of claims 4 to 10, wherein the part of the padded boundary zone (PBZ) computed by motion-compensation is refined after the current block of the video picture is reconstructed.

12. A bitstream, formatted to include encoded video picture data and information data obtained from a method of one of claims 1, 3 to 11.

13. An apparatus comprising means for performing one of the method claimed in any one of claims 1 to 11.

14. A computer program product including instructions which, when the program is executed by one or more processors, causes the one or more processors to carry out a method claimed in any one of claims 1 to 11.

15. A non-transitory storage medium carrying instructions of program code for executing a method claimed in any one of claims 1 to 11.

**Fig. 1**

NxN   2Nx2N   Nx2N   2NxN

nLx2N   nLx2N   2NxnU   2NxnD

**Fig. 2**

# Fig. 3

# Fig. 4

**Fig. 5**

**Fig. 6**

padding area

List0 reference picture

List1 reference picture

List0 reference block

List1 reference block

List0 motion vector

List1 motion vector

Current block

**Fig. 7**

Padded reference picture boundary

Reference picture boundary

bs

Reference block

M

**Fig. 8**

Reference picture 1
boundary

RB

CB

MV1

Z

Current video picture

**Fig. 9**

Reference picture 2
boundary

NBR

MV2

M

Reference picture 1
boundary

RB

NB

M

SZ

P

PZ

4

**Fig. 10**

Padding area   Picture area
Reference for padding area
Reference for picture area
Picture area
Reference of boundary block

curent picture                    reference picture

# Fig. 11

300

310
no

yes

320

# Fig. 12

320

3201

3203

3204

3202

3205

3206

## Fig. 13

P    B1         B2    PDZ

P

M

SB1,i

CB1

SB2,i

CB2

CB6

CB5

CB3

CB4

## Fig. 14

**Fig. 15**

**Fig. 16**

600

690    610    620    660    661

RF, COMP, USB, HDMI | Processor | Memory | Display Interface | Display

570    671

Audio Interface | Speakers

630    640    680    681

Encoder/ Decoder | Storage Device | Peripheral Interface | Peripherals

650

Communications Interface

651

Communications channel

# Fig. 17

Europäisches
Patentamt

European
Patent Office

Office européen
des brevets

# EUROPEAN SEARCH REPORT

Application Number

EP 22 30 6502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG (QUALCOMM) Z ET AL: "EE2-related: Motion compensation boundary padding", 26. JVET MEETING; 20220420 – 20220429; TELECONFERENCE; (THE JOINT VIDEO EXPLORATION TEAM OF ISO/IEC JTC1/SC29/WG11 AND ITU-T SG.16 ), , no. JVET-Z0130 ; m59462 25 April 2022 (2022-04-25), XP030301009, Retrieved from the Internet: URL:https://jvet-experts.org/doc_end_user/documents/26_Teleconference/wg11/JVET-Z0130-v4.zip JVET-Z0130-v4.docx [retrieved on 2022-04-25] * the whole document * | 1-15 | INV. H04N19/105 H04N19/117 H04N19/159 H04N19/176 H04N19/82 |
| X | WO 2022/174782 A1 (BEIJING BYTEDANCE NETWORK TECH CO LTD [CN]; BYTEDANCE INC [US]) 25 August 2022 (2022-08-25) * paragraph [0075] – paragraph [0223]; figures 4,5,7 * | 1-15 | |
| X | US 2019/082193 A1 (SUN YU-CHEN [US] ET AL) 14 March 2019 (2019-03-14) * paragraph [0020] – paragraph [0120]; figures 5,6 * | 1-15 | TECHNICAL FIELDS SEARCHED (IPC) H04N |

The present search report has been drawn up for all claims

| Place of search | Date of completion of the search | Examiner |
|---|---|---|
| Munich | 19 January 2023 | Cyranka, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 30 6502

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2023

| Patent document cited in search report | Publication date | Patent family member(s) | Publication date |
|---|---|---|---|
| WO 2022174782 A1 | 25-08-2022 | NONE | |
| US 2019082193 A1 | 14-03-2019 | US 2019082193 A1 | 14-03-2019 |
| | | WO 2019051146 A1 | 14-03-2019 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Description of SDR, HDR and 360° video coding technology proposal by Qualcomm and Technicolor - low and high complexity versions. *Joint Video Exploration Team (JVET) of ITU-T SG 16 WP 3 and ISO/IEC JTC 1/SC 29/WG 11, 10th Meeting: San Diego, US,* 10 April 2018, https://jvet-experts.org/doc_end_user/documents/10_San%20Diego/wg11/JVET-J0021-v5.zip

- **HUAWEI ; GOPRO ; HISILICON ; SAMSUNG.** Description of SDR, HDR and 360° video coding technology proposal. *Joint Video Exploration Team (JVET) of ITU-T SG 16 WP 3 and ISO/IEC JTC 1/SC 29/WG 11, 10th Meeting: San Diego, US,* 10 April 2018, https://jvet-experts.org/doc_end_user/documents/10_San%20Diego/wg11/JVET-J0025-v4.zip

- **YI-WEN CHEN ; CHE-WEI KUO ; NING YAN ; WEI CHEN ; XIAOYU XIU ; XIANGLIN WANG.** AHG12: Enhanced bi-directional motion compensation. *Joint Video Experts Team (JVET) of ITU-T SG 16 WP 3 and ISO/IEC JTC 1/SC 29 25th Meeting, by teleconference,* 12 January 2022